(19) **Europäisches Patentamt / European Patent Office / Office européen des brevets**

(11) **EP 4 421 904 A1**

(12) # EUROPEAN PATENT APPLICATION
published in accordance with Art. 153(4) EPC

(43) Date of publication:
**28.08.2024 Bulletin 2024/35**

(21) Application number: **21961675.2**

(22) Date of filing: **26.10.2021**

(51) International Patent Classification (IPC):
**H01M 4/36** (2006.01)    **H01M 4/583** (2010.01)

(52) Cooperative Patent Classification (CPC):
**Y02E 60/10**

(86) International application number:
**PCT/CN2021/126238**

(87) International publication number:
**WO 2023/070292 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **ZHANG, Xue**
**Ningde City, Fujian 352100 (CN)**

(74) Representative: **Icosa**
**83 avenue Denfert-Rochereau**
**75014 Paris (FR)**

(54) **POSITIVE ELECTRODE, AND ELECTROCHEMICAL DEVICE USING SAME, AND ELECTRONIC DEVICE**

(57)    This application relates to a positive electrode and an electrochemical apparatus and electronic apparatus using the same. Specifically, this application provides a positive electrode including a first positive electrode active material and a second positive electrode active material, where the first positive electrode active material is sulfurized polyacrylonitrile with a sulfur percentage of 45wt% to 60wt%, and the second positive electrode active material is sulfurized polyacrylonitrile with a sulfur percentage of 30wt% to 40wt%. The positive electrode of this application helps to increase energy density and energy density retention rate of the electrochemical apparatus..

FIG. 2

EP 4 421 904 A1

**Description**

**TECHNICAL FIELD**

This application relates to the field of energy storage, and specifically, to a positive electrode and an electrochemical apparatus and electronic apparatus using the same.

**BACKGROUND**

Electrochemical apparatuses (for example, lithium-sulfur batteries) with high energy density have become the research and development focus for the next-generation high-energy-density energy storage systems. Conventional lithium-sulfur batteries use elemental sulfur as the positive electrode, which easily forms shuttling polysulfides and "dead sulfur" during charging and discharging, leading to capacity decay. In lithium-sulfur batteries prepared using the sulfurized polyacrylonitrile material as the positive electrode, the sulfur positive electrode exhibits high utilization and forms no polysulfide when combined with the ester-based electrolyte, allowing for more stable cycling, so it has attracted much attention. However, the commonly used sulfurized polyacrylonitrile material has a low sulfur percentage, resulting in a low energy density of the lithium-sulfur batteries. Increasing the sulfur percentage in the sulfurized polyacrylonitrile material severely affects the kinetic performance of the material, and thus is still unable to effectively increase the energy density of the lithium-sulfur batteries.

In view of this, it is indeed necessary to provide an improved positive electrode to increase the energy density and energy density retention rate of the electrochemical apparatuses.

**SUMMARY**

This application provides a positive electrode and an electrochemical apparatus and electronic apparatus using the same in an attempt to solve at least one problem existing in the related art to at least some extent.

According to an aspect of this application, this application provides a positive electrode including a first positive electrode active material and a second positive electrode active material, where the first positive electrode active material is sulfurized polyacrylonitrile with a sulfur percentage of 45wt% to 60wt%, and the second positive electrode active material is sulfurized polyacrylonitrile with a sulfur percentage of 30wt% to 40wt%.

According to an embodiment of this application, a ratio of the sulfur percentage in the first active material to the sulfur percentage in the second active material is 1.1 to 1.5.

According to an embodiment of this application, based on a weight of the positive electrode, a ratio of a mass of element sulfur in the first active material to a mass of element sulfur in the second active material is 1 to 3.

According to an embodiment of this application, a particle size of the first active material is 2 $\mu$m to 5 $\mu$m, and a particle size of the second active material is 0.5 $\mu$m to 3 $\mu$m.

According to an embodiment of this application, a ratio of the particle size of the first active material to the particle size of the second active material is 2.5 to 5.

According to an embodiment of this application, the first active material and the second active material form an agglomerate, and according to an elemental analysis test method, the second active material surrounds surface of the first active material.

According to an embodiment of this application, a compacted density of the positive electrode is 1.2 g/cm$^3$ to 1.5 g/cm$^3$.

According to another aspect of this application, this application provides an electrochemical apparatus including a negative electrode, an electrolyte, and the positive electrode according to this application.

According to an embodiment of this application, the electrolyte includes a phosphoric ester additive, and based on a weight of the electrolyte, a percentage of the phosphoric ester additive is 2% to 4%.

According to an embodiment of this application, the phosphoric ester additive includes at least one of trimethyl phosphate, triethyl phosphate, tributyl phosphate, triphenyl phosphate, trimethyl phosphite, triethyl phosphite, diethyl phenylphosphite, or tris(trimethylsilyl) phosphite.

According to an embodiment of this application, the negative electrode includes at least one of lithium metal, lithium-copper composite strip, lithium alloy, lithiated graphite material, or lithiated silicon material.

According to still another aspect of this application, this application provides an electronic apparatus including the electrochemical apparatus according to this application.

Using the positive electrode provided in this application can significantly increase energy density and energy density retention rate of the electrochemical apparatus.

Additional aspects and advantages of this application are partially described and presented in subsequent descriptions, or explained by implementation of some embodiments of this application.

**BRIEF DESCRIPTION OF DRAWINGS**

To describe embodiments of this application, the following briefly describes the accompanying drawings required for describing some embodiments of this application or the prior art. Apparently, the accompanying drawings described below are merely some embodiments of this application. Persons skilled in the art may still derive drawings for other embodiments from structures shown in these accompanying drawings without creative efforts.

FIG. 1 is a schematic diagram of an elemental analysis test method.
FIG. 2 shows curves of energy densities of lithium-sulfur batteries in comparative examples and examples of this application as a function of the number of cycles.

**DESCRIPTION OF EMBODIMENTS**

Embodiments of this application are described in detail below. Some embodiments of this application should not be construed as any limitations on this application.

In specific embodiments and claims, a list of items connected by the term "at least one of" may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may include a single element or a plurality of elements. The item B may include a single element or a plurality of elements. The item C may include a single element or a plurality of elements. The term "at least one type of" has the same meaning as the term "at least one of".

Positive electrode

Conventional lithium-sulfur batteries use the system of combining elemental sulfur with ether-based electrolyte, which exhibits a solid-liquid-solid reaction path during charging and discharging, and generates polysulfides with severe shuttle effect, leading to accelerated capacity decay and eventual failure of the battery. Due to a special structure (that is, sulfur exists as small molecules in the form of $S_2$-$S_6$ and is confined within the carbon skeleton), sulfurized polyacrylonitrile materials can exhibit a solid-solid reaction path when combined with a carbonate-based electrolyte, thereby avoiding the shuttle effect caused by polysulfides. Lithium-sulfur batteries prepared using the sulfurized polyacrylonitrile materials have low self-discharge and more stable cycling, and thus have attracted much attention.

However, the sulfurized polyacrylonitrile material is obtained by thermal treatment of elemental sulfur and polyacrylonitrile, and the sulfur percentage in the sulfurized polyacrylonitrile material is generally low, so lithium-sulfur batteries prepared using such sulfurized polyacrylonitrile materials with low sulfur percentage have low energy density. Researchers generally use the following methods to increase energy density of lithium-sulfur batteries, but these methods still face several problems.

(1) Improving the process to increase the sulfur percentage in the sulfurized polyacrylonitrile material. However, after the sulfur percentage is increased, kinetic performance of the sulfurized polyacrylonitrile material becomes worse, and a lithium-sulfur battery assembled using such material exhibits severe cycling decay, poor high-rate performance, and low capacity utilization. Consequently, overall energy density of the battery is not effectively increased.
(2) Doping with sulfurized polyacrylonitrile (for example, doping selenium with sulfurized polyacrylonitrile). However, this method has limited improvement on energy density and rate performance and has high costs.
(3) Using a new aqueous conductive binder. This can improve rate performance to some extent, but this method is costly, and such commonly used conductive agent increases an amount of electrolyte used, which is not conducive to increasing overall energy density of the battery.
(4) Introducing additives such as a redox mediator additive and a compatibilizer into the electrolyte. This method can well improve rate performance and energy density, but the costs of the additives involved are generally high, and such additives often cause deterioration of a negative electrode side, resulting in poor cycling performance of the battery.

This application solves the foregoing problems by using sulfurized polyacrylonitrile with high sulfur percentage and sulfurized polyacrylonitrile with low sulfur percentage in combination as positive electrode active materials, significantly increasing the energy density and energy density retention rate of the electrochemical apparatus (for example, the lithium-sulfur battery). Specifically, this application provides a positive electrode including a first positive electrode active material and a second positive electrode active material, where the first positive electrode active material is sulfurized polyacrylonitrile with a sulfur percentage of 45wt% to 60wt%, and the second positive electrode active material is sulfurized polyacrylonitrile with a sulfur percentage of 30wt% to 40wt%. The sulfurized polyacrylonitrile with low sulfur percentage has good conductivity, and can establish a good conductive path when combined with sulfurized polyacrylonitrile with high sulfur percentage. Meanwhile, the sulfurized polyacrylonitrile with low sulfur percentage is an active material, which can provide capacity for a battery. Using the sulfurized polyacrylonitrile with low sulfur percentage and the sulfurized polyacrylonitrile with high sulfur percentage in combination can balance high sulfur percentage and good kinetics of the composite positive electrode, thereby increasing the energy density and energy density retention rate.

In some embodiments, the first positive electrode active material is sulfurized polyacrylonitrile with a sulfur percentage of 45wt%, 50wt%, 55wt%, or 60wt%. In some embodiments, the second positive electrode active material is sulfurized polyacrylonitrile with a sulfur percentage of 30wt%, 33wt%, 35wt%, 38wt%, or 40wt%.

The sulfurized polyacrylonitrile with high sulfur percentage (with a sulfur percentage of 45wt% to 60wt%) can have thermal stability above 350 degrees, and the sulfurized polyacrylonitrile with low sulfur percentage (with a sulfur percentage of 30wt% to 40wt%) can have thermal stability above 500 degrees. Cutting the positive electrode using focused ion beam (FIB) does not destroy shape and structure of active material particles in the positive electrode, and then sulfur percentages in particles in the cut cross section are measured using an elemental analysis method to obtain sulfur percentages in the sulfurized polyacrylonitrile with high sulfur percentage and the sulfurized polyacrylonitrile with low sulfur percentage. This test method can eliminate influences of a binder and conductive agent in the positive electrode.

In some embodiments, a ratio of the sulfur percentage in the first active material to the sulfur percentage in the second active material is 1.1 to 1.5. In some embodiments, the ratio of the sulfur percentage in the first active material to the sulfur percentage in the second active material is 1.1, 1.2, 1.3, 1.4, or 1.5, or falls within a range defined by any two of these values. The ratio of the sulfur percentage in the first active material to the sulfur percentage in the second active material falling within the foregoing range helps to further increase the energy density and energy density retention rate of the electrochemical apparatus.

In some embodiments, based on a weight of the positive electrode, a ratio of a mass of element sulfur in the first active material to a mass of element sulfur in the second active material is 1 to 3. In some embodiments, based on the weight of the positive electrode, the ratio of the mass of the element sulfur in the first active material to the mass of the element sulfur in the second active material is 1, 1.5, 2, 2.5, or 3, or falls within a range defined by any two of these values. The ratio of the mass of the element sulfur in the first active material to the mass of the element sulfur in the second active material falling within the foregoing range helps to further increase the energy density and energy density retention rate of the electrochemical apparatus.

In some embodiments, a particle size of the first active material is 2 $\mu$m to 5 $\mu$m, and a particle size of the second active material is 0.5 $\mu$m to 3 $\mu$m. In some embodiments, the particle size of the first active material is 2 $\mu$m, 3 $\mu$m, 4 $\mu$m, or 5 $\mu$m, or falls within a range defined by any two of these values. In some embodiments, the particle size of the second active material is 0.5 $\mu$m, 1 $\mu$m, 1.5 $\mu$m, 2 $\mu$m, 2.5 $\mu$m, or 3 $\mu$m, or falls within a range defined by any two of these values. The particle sizes of the first active material and the second active material falling within the foregoing ranges helps to further increase the energy density and energy density retention rate of the electrochemical apparatus.

In some embodiments, a ratio of the particle size of the first active material to the particle size of the second active material is 2.5 to 5. In some embodiments, the ratio of the particle size of the first active material to the particle size of the second active material is 2.5, 3, 3.5, 4, 4.5, or 5, or falls within a range defined by any two of these values. The ratio of the particle size of the first active material to the particle size of the second active material falling within the foregoing range helps to further increase the energy density and energy density retention rate of the electrochemical apparatus.

In some embodiments, the first active material and the second active material form an agglomerate, and according to an elemental analysis test method, the second active material surrounds surface of the first active material.

In some embodiments, a compacted density of the positive electrode is 1.2 g/cm$^3$ to 1.5 g/cm$^3$. In some embodiments, the compacted density of the positive electrode is 1.2 g/cm$^3$, 1.3 g/cm$^3$, 1.4 g/cm$^3$, or 1.5 g/cm$^3$, or falls within a range defined by any two of these values. The compacted density of the positive electrode falling within the foregoing range helps to further increase the energy density and energy density retention rate of the electrochemical apparatus.

In some embodiments, a positive electrode active material layer further includes a binder. The binder can enhance bonding between particles of the positive electrode active material, and bonding between the positive electrode active material and a positive electrode current collector. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the positive electrode active material layer further includes a conductive material, thereby imparting conductivity to the electrode. The conductive material may include any conductive material as long as such conductive material causes no chemical change. Non-limiting examples of the conductive material include a carbon-based material (for example, natural graphite, artificial graphite, carbon black, acetylene black, Ketjen black, carbon fiber, and carbon nanotubes), a metal-based material (for example, metal powder and metal fiber, including copper, nickel, aluminum, silver, and the like), a conductive polymer (for example, a polyphenylene derivative), and a mixture thereof.

In some embodiments, the positive electrode current collector includes but is not limited to aluminum (Al).

Electrolyte

In some embodiments, the electrolyte includes a phosphoric ester additive. Using the positive electrode active material and the electrolyte including the phosphoric ester additive in this application in combination helps to further increase the energy density and energy density retention rate of the electrochemical apparatus.

In some embodiments, the phosphoric ester additive includes at least one of trimethyl phosphate, triethyl phosphate, tributyl phosphate, triphenyl phosphate, trimethyl phosphite, triethyl phosphite, diethyl phenylphosphite, or tris(trimethylsilyl) phosphite.

In some embodiments, based on a weight of the electrolyte, a percentage of the phosphoric ester additive is 2% to 4%. In some embodiments, based on the weight of the electrolyte, the percentage of the phosphoric ester additive is 2%, 2.5%, 3%, 3.5%, or 4%, or falls within a range defined by any two of these values.

A lithium salt that can be used in the electrolyte of these embodiments of this application includes but is not limited to inorganic lithium salts such as $LiClO_4$, $LiAsF_6$, $LiPF_6$, $LiBF_4$, $LiSbF_6$, $LiSO_3F$, and $LiN(FSO_2)_2$; fluorine-containing organic lithium salts such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonimide lithium, cyclic 1,2-tetrafluoroethane disulfonimide lithium, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$; and lithium salts containing dicarboxylic acid complex such as lithium bis(oxalato)borate, lithium difluoro(oxalato)borate, lithium tris(oxalato)phosphate, lithium difluorobis(oxalato)phosphate, and lithium tetrafluoro(oxalato)phosphate. In addition, one of the foregoing lithium salts may be used alone, or two or more thereof may be used. In some embodiments, the lithium salt includes a combination of $LiPF_6$ and $LiBF_4$. In some embodiments, the lithium salt includes a combination of an inorganic lithium salt such as $LiPF_6$ or $LiBF_4$ and a fluorine-containing organic lithium salt such as $LiCF_3SO_3$, $LiN(CF_3SO_2)_2$, or $LiN(C_2F_5SO_2)_2$. In some embodiments, a concentration of the lithium salt falls within a range of 0.8 mol/L to 3 mol/L, 0.8 mol/L to 2.5 mol/L, 0.8 mol/L to 2 mol/L, or 1 mol/L to 2 mol/L. In some embodiments, the concentration of the lithium salt is about 1 mol/L, about 1.15 mol/L, about 1.2 mol/L, about 1.5 mol/L, about 2 mol/L, or about 2.5 mol/L.

A solvent that can be used in the electrolyte of these embodiments of this application includes but is not limited to cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, the cyclic carbonate includes but is not limited to ethylene carbonate (ethylene carbonate, EC), propylene carbonate (propylene carbonate, PC), and butylene carbonate. In some embodiments, the cyclic carbonate has 3 to 6 carbon atoms.

In some embodiments, the linear carbonate includes but is not limited to linear carbonates such as dimethyl carbonate (dimethyl carbonate, DMC), ethyl methyl carbonate, diethyl carbonate, methyl n-propyl carbonate, ethyl n-propyl carbonate, and di-n-propyl carbonate, and fluorine-substituted linear carbonates such as bis(fluoromethyl) carbonate, bis(difluoromethyl) carbonate, bis(trifluoromethyl) carbonate, bis(2-fluoroethyl) carbonate, bis(2,2-difluoroethyl) carbonate, bis(2,2,2-trifluoroethyl) carbonate, 2-fluoroethyl methyl carbonate, 2,2-difluoroethyl methyl carbonate, and 2,2,2-trifluoroethyl methyl carbonate.

In some embodiments, the cyclic carboxylate includes but is not limited to γ-butyrolactone and γ-valerolactone. In some embodiments, some hydrogen atoms in the cyclic carboxylate may be replaced with fluorine.

In some embodiments, the linear carboxylate includes but is not limited to methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the linear carboxylate may be replaced with fluorine. In some embodiments, the fluorine-substituted linear carboxylate includes but is not limited to methyl trifluoroacetate, ethyl trifluoroacetate, propyl trifluoroacetate, butyl trifluoroacetate, and 2,2,2-trifluoroethyl trifluoroacetate.

In some embodiments, the cyclic ether includes but is not limited to tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, the linear ether includes but is not limited to dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, the sulfur-containing organic solvent includes but is not limited to sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the sulfur-containing organic solvent may be replaced with fluorine.

In some embodiments, the aromatic fluorine-containing solvent includes but is not limited to fluorobenzene, difluorobenzene, trifluorobenzene, tetrafluorobenzene, pentafluorobenzene, hexafluorobenzene, and trifluoromethylbenzene.

In some embodiments, the solvent used in the electrolyte of this application includes one or more of the foregoing solvents. In some embodiments, the solvent used in the electrolyte of this application includes cyclic carbonate, linear carbonate, cyclic carboxylate, linear carboxylate, and a combination thereof. In some embodiments, the solvent used in the electrolyte of this application includes an organic solvent selected from a group consisting of the following substances: ethylene carbonate, propylene carbonate, diethyl carbonate, ethyl propionate, propyl propionate, n-propyl acetate, ethyl acetate, and a combination thereof. In some embodiments, the solvent used in the electrolyte of this application includes ethylene carbonate, propylene carbonate, diethyl carbonate, ethyl propionate, propyl propionate, $\gamma$-butyrolactone, or a combination thereof.

An additive that can be used in the electrolyte of these embodiments of this application includes but is not limited to a compound having 2 to 3 cyano groups and a compound having a sulfur-oxygen double bond.

In some embodiments, the compound having 2 to 3 cyano groups may include at least one selected from succinonitrile (SN), adiponitrile (ADN), ethylene glycol bis(propionitrile) ether (EDN), 1,3,5-pentanetricarbonitrile, 1,2,3-propanetricarbonitrile, 1,3,6-hexanetricarbonitrile (HTCN), 1,2,6-hexanetricarbonitrile, 1,2,3-tris(2-cyanoethoxy)propane (TCEP), or 1,2,4-tris(2-cyanoethoxy)butane.

In some embodiments, the compound having a sulfur-oxygen double bond includes but is not limited to at least one of vinyl sulfate or 1,2-propanediol sulfate.

The electrolyte of this application may be prepared using any known method. In some embodiments, the electrolyte of this application may be prepared by mixing all constituents.

Negative electrode

The negative electrode includes a negative electrode current collector and a negative electrode active material disposed on one or two surfaces of the negative electrode current collector. The negative electrode active material is not limited to a specific type, and may be selected based on needs.

In some embodiments, the negative electrode includes at least one of lithium metal, lithium-copper composite strip, lithium alloy, lithiated graphite material, or lithiated silicon material.

In some embodiments, the negative electrode active material includes a binder. The binder enhances bonding between particles of the negative electrode active material, and bonding between the negative electrode active material and the current collector. Non-limiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments, the negative electrode active material includes a conductive material, thereby imparting conductivity to the electrode. The conductive material may include any conductive material as long as such conductive material causes no chemical change. Non-limiting examples of the conductive material include a carbon-based material (for example, carbon black, acetylene black, Ketjen black, carbon fiber, and carbon nanotubes), a metal-based material (for example, metal powder and metal fiber, including copper, nickel, aluminum, silver, and the like), a conductive polymer (for example, a polyphenylene derivative), and a mixture thereof.

Separator

In some embodiments, a separator is provided between the positive electrode and the negative electrode to prevent short circuit. The separator is not limited to a particular material or shape, and may be based on any technology disclosed in the prior art. In some embodiments, the separator includes a polymer, an inorganic substance, or the like formed by a material stable to the electrolyte of this application.

In some embodiments, the separator includes a substrate layer. In some embodiments, the substrate layer is a non-woven fabric, film, or composite film having a porous structure. In some embodiments, material of the substrate layer is selected from at least one of polyethylene, polypropylene, polyethylene glycol terephthalate, or polyimide. In some embodiments, the material of the substrate layer is selected from a polypropylene porous film, a polyethylene porous film, a polypropylene non-woven fabric, a polyethylene non-woven fabric, or a polypropylene-polyethylene-polypropylene porous composite film.

In some embodiments, at least one surface of the substrate layer is provided with a surface treatment layer. In some embodiments, the surface treatment layer may be a polymer layer, an inorganic substance layer, or a layer formed by mixing a polymer and an inorganic substance. In some embodiments, the polymer layer includes a polymer, and material of the polymer is selected from at least one of polyamide, polyacrylonitrile, an acrylate polymer, polyacrylic acid, polyacrylate salt, polyvinylpyrrolidone, polyvinyl ether, polyvinylidene fluoride, or poly(vinylidene fluoride-hexafluoropropylene).

In some embodiments, the inorganic substance layer includes inorganic particles and a binder. In some embodiments, the inorganic particles are selected from a combination of one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. In some embodiments, the binder is selected from a combination of one or more of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, and polyhexafluoropropylene.

Electrochemical apparatus

This application further provides an electronic apparatus including the positive electrode, negative electrode, and electrolyte according to this application.

The electrochemical apparatus of this application includes any apparatus in which electrochemical reactions take place. Specific examples of the apparatus include all types of primary batteries, secondary batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery. In some embodiments, the electrochemical apparatus of this application includes: a positive electrode plate having a positive electrode active substance capable of occluding and releasing metal ions; the negative electrode plate according to some embodiments of this application; an electrolyte; and a separator sandwiched between the positive electrode plate and the negative electrode plate.

Electronic apparatus

This application further provides an electronic apparatus including the electrochemical apparatus according to this application.

The electrochemical apparatus of this application is not particularly limited to any purpose, and may be used in any known electronic apparatus in the prior art. In some embodiments, the electrochemical apparatus of this application may be used without limitation in a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The following describes preparation of lithium-ion battery by using a lithium-ion battery as an example and with reference to specific examples. Persons skilled in the art understand that the preparation method described in this application is only an example, and that all other suitable preparation methods fall within the scope of this application.

**Examples**

The following describes performance evaluation performed based on examples and comparative examples of the lithium-ion battery of this application.

**I. Preparation of lithium-ion battery**

1. Preparation of positive electrode

Example 1

Sulfurized polyacrylonitrile with a sulfur percentage of 45% (with an average particle size of 5 $\mu$m), sulfurized polyacrylonitrile with a sulfur percentage of 39% (with an average particle size of 3 $\mu$m), a conductive agent Super P, sodium carboxymethyl cellulose (CMC), and styrene-butadiene rubber (SBR) were weighed at a mass ratio of 8.36:9.64:1:0.5:0.5, an appropriate amount of deionized water was added, and the mixture was mixed to produce a uniform slurry with a solid content of 20%. The slurry was uniformly applied onto aluminum foil with a carbon primer layer using a coating machine, and vacuum dried at 90°C for 18 hours. The dried electrode plate was not subjected to cold pressing, and directly cut into circular sheets with a diameter of 1.4 cm using a punching machine to obtain a positive electrode.

Example 2

The preparation method of the positive electrode in Example 2 was substantially the same as that in Example 1, except that the obtained electrode plate was subjected to 3 tons of cold pressing before cut into circular sheets.

Example 3

The preparation method of the positive electrode in Example 3 was substantially the same as that in Example 2, except that the raw materials were sulfurized polyacrylonitrile with a sulfur percentage of 52%, sulfurized polyacrylonitrile with a sulfur percentage of 35%, Super P, CMC, and SBR at a mass ratio of 7.24:10.76:1:0.5:0.5.

Example 4

The preparation method of the positive electrode in Example 4 was substantially the same as that in Example 2, except that the raw materials were sulfurized polyacrylonitrile with a sulfur percentage of 52%, sulfurized polyacrylonitrile with a sulfur percentage of 39%, Super P, CMC, and SBR at a mass ratio of 7.7:10.3:1:0.5:0.5.

Example 5

The preparation method of the positive electrode in Example 5 was substantially the same as that in Example 2, except that the raw materials were sulfurized polyacrylonitrile with a sulfur percentage of 59%, sulfurized polyacrylonitrile with a sulfur percentage of 30%, Super P, CMC, and SBR at a mass ratio of 8.6:9.4:1:0.5:0.5.

Example 6

The preparation method of the positive electrode in Example 6 was substantially the same as that in Example 2, except that the raw materials were sulfurized polyacrylonitrile with a sulfur percentage of 52%, sulfurized polyacrylonitrile with a sulfur percentage of 39%, Super P, CMC, and SBR at a mass ratio of 13.5:4.5:1:0.5:0.5.

Example 7

The preparation method of the positive electrode in Example 7 was substantially the same as that in Example 2, except that the raw materials were sulfurized polyacrylonitrile with a sulfur percentage of 52%, sulfurized polyacrylonitrile with a sulfur percentage of 39%, Super P, CMC, and SBR at a mass ratio of 12:6:1:0.5:0.5.

Example 8

The preparation method of the positive electrode in Example 8 was substantially the same as that in Example 2, except that the raw materials were sulfurized polyacrylonitrile with a sulfur percentage of 52%, sulfurized polyacrylonitrile with a sulfur percentage of 39%, Super P, CMC, and SBR at a mass ratio of 9:9:1:0.5:0.5.

Example 9

The preparation method of the positive electrode in Example 9 was substantially the same as that in Example 2, except that the raw materials were sulfurized polyacrylonitrile with a sulfur percentage of 52%, sulfurized polyacrylonitrile with a sulfur percentage of 39%, Super P, CMC, and SBR at a mass ratio of 6:12:1:0.5:0.5.

Example 10

The preparation method of the positive electrode in Example 10 was substantially the same as that in Example 7, except that the sulfurized polyacrylonitrile with a sulfur percentage of 52% had a particle size of 2 $\mu$m and the sulfurized

polyacrylonitrile with a sulfur percentage of 39% had a particle size of 1 μm.

### Example 11

The preparation method of the positive electrode in Example 11 was substantially the same as that in Example 7, except that the sulfurized polyacrylonitrile with a sulfur percentage of 39% had a particle size of 1.8 μm.

### Example 12

The preparation method of the positive electrode in Example 12 was substantially the same as that in Example 7, except that the sulfurized polyacrylonitrile with a sulfur percentage of 39% had a particle size of 1 μm.

### Example 13

The preparation method of the positive electrode in Example 13 was substantially the same as that in Example 7, except that the sulfurized polyacrylonitrile with a sulfur percentage of 39% had a particle size of 0.5 μm.

### Example 14

The preparation method of the positive electrode in Example 14 was substantially the same as that in Example 11, except that the positive electrode slurry was prepared using the following method: sulfurized polyacrylonitrile with a sulfur percentage of 52% and sulfurized polyacrylonitrile with a sulfur percentage of 39% were mixed at a mass ratio of 12:6 and then subjected to liquid-phase surface treatment, drying at 90°C, and thermal treatment at 240°C for 3 hours to obtain a powder material. The obtained powder material, Super P, CMC, and SBR were mixed at a mass ratio of 18:1:0.5:0.5, deionized water was added, and the mixture was mixed to produce a uniform slurry.

### Example 15

The preparation method of the positive electrode in Example 15 was substantially the same as that in Example 14, except that the obtained electrode plate was subjected to 7 tons of cold pressing before cut into circular sheets.

### Example 16

The preparation method of the positive electrode in Example 16 was substantially the same as that in Example 14, except that the obtained electrode plate was subjected to 12 tons of cold pressing before cut into circular sheets.

### Example 17

The preparation method of the positive electrode in Example 17 was substantially the same as that in Example 15, except that 2wt% tris(trimethylsilyl) phosphite was added to the electrolyte.

### Example 18

The preparation method of the positive electrode in Example 18 was substantially the same as that in Example 15, except that 4wt% tris(trimethylsilyl) phosphite was added to the electrolyte.

### Example 19

The preparation method of the positive electrode in Example 19 was substantially the same as that in Example 15, except that 6wt% tris(trimethylsilyl) phosphite was added to the electrolyte.

### Example 20

The preparation method of the positive electrode in Example 20 was substantially the same as that in Example 15, except that 3wt% diethyl phenylphosphite was added to the electrolyte.

Example 21

The preparation method of the positive electrode in Example 21 was substantially the same as that in Example 15, except that 1.5wt% trimethyl phosphite was added to the electrolyte.

Comparative Example 1

The preparation method of the positive electrode in Comparative Example 1 was substantially the same as that in Example 1, except that the raw materials were sulfurized polyacrylonitrile with a sulfur percentage of 45% (with an average particle size of 5 $\mu$m), Super P, CMC, and SBR at a mass ratio of 18:1:0.5:0.5.

Comparative Example 2

The preparation method of the positive electrode in Comparative Example 2 was substantially the same as that in Example 1, except that the raw materials were sulfurized polyacrylonitrile with a sulfur percentage of 52% (with an average particle size of 5 $\mu$m), Super P, CMC, and SBR at a mass ratio of 18:1:0.5:0.5.

Comparative Example 3

The preparation method of the positive electrode in Comparative Example 3 was substantially the same as that in Example 1, except that the raw materials were sulfurized polyacrylonitrile with a sulfur percentage of 59% (with an average particle size of 5 $\mu$m), Super P, CMC, and SBR at a mass ratio of 18:1:0.5:0.5.

Comparative Example 4

The preparation method of the positive electrode in Comparative Example 4 was substantially the same as that in Example 1, except that the raw materials were sulfurized polyacrylonitrile with a sulfur percentage of 39% (with an average particle size of 3 $\mu$m), Super P, CMC, and SBR at a mass ratio of 18:1:0.5:0.5.

Comparative Example 5

The preparation method of the positive electrode in Comparative Example 5 was substantially the same as that in Example 1, except that the raw materials were sulfurized polyacrylonitrile with a sulfur percentage of 40% (with an average particle size of 5 $\mu$m), sulfurized polyacrylonitrile with a sulfur percentage of 25% (with an average particle size of 3 $\mu$m), Super P, CMC, and SBR at a mass ratio of 6.92:11.08:1:0.5:0.5.

2. Preparation of negative electrode

A circular lithium sheet with a diameter of 1.6 cm and a thickness of 300 $\mu$m was used as a negative electrode.

3. Preparation of electrolyte

Ethylene carbonate (EC) and dimethyl carbonate (DMC) were evenly mixed at a mass ratio of 1:1, then LiPF$_6$ (1 mol/L) was added, and the mixture was stirred to obtain a uniform base electrolyte. According to the settings of the examples, a target compound was added to the base electrolyte to obtain an electrolyte.

4. Preparation of separator

A circular polyethylene (PE) porous polymer film with a diameter of 1.9 cm was used as a separator.

5. Preparation of battery

The positive electrode, the separator, and the negative electrode were stacked in sequence and placed in a button cell packaging housing, the electrolyte was injected, and the housing was sealed to obtain a battery.

**II. Test method**

1. Test method of sulfur percentage in positive electrode active material

A cross section of the positive electrode removed from the battery was cut using FIB, and through an energy-dispersive X-ray spectroscopy (EDS) test, particles with a size larger than 500 nm along the diagonal line from the upper left to the lower right of the image were tested in point mode to analyze mass fractions of element sulfur in the particles. This method can eliminate influences of the conductive agent and binder on the surface of the sulfurized polyacrylonitrile particles on elemental analysis. The test magnification was adjusted such that at least 10 particles were tested. Then, the mass fraction of the sulfur percentage in each obtained particle was analyzed. With the data with a sulfur percentage lower than 5% excluded, the maximum value was recorded as Max and the minimum value was recorded as Min.

When $(Max - Min)/Min \leq 5\%$, it was considered that the first positive electrode active material and the second positive electrode active material had equal sulfur percentages. When $(Max - Min)/Min > 5\%$, it was considered that the first positive electrode active material and the second positive electrode active material had different sulfur percentages, where an average of values greater than $(Max + Min)/2$ was recorded as a sulfur percentage in the first positive electrode active material, and an average of values less than $(Max + Min)/2$ was recorded as a sulfur percentage in the second positive electrode active material.

2. Test method of mass ratio of element sulfur

A cross section of the positive electrode removed from the battery was cut using FIB, and at least three regions on the cross section were selected for an EDS test, with a magnification set to 5000 times. The test method was the same as that in "1. Test method of sulfur percentage in positive electrode active material". The sulfur percentage in the first positive electrode active material was recorded as A, and the sulfur percentage in the second positive electrode active material was recorded as B. A ratio of an area of the first positive electrode active material to an area of the second positive electrode active material in the test region was counted and recorded as C. Because densities of sulfurized polyacrylonitrile with different sulfur percentages did not differ significantly, the area ratio C can be considered as a mass fraction ratio of the first positive electrode active material to the second positive electrode active material in this region. The mass fraction ratio D of element sulfur in the first positive electrode active material to element sulfur in the second positive electrode active material in each test region was calculated according to the following formula:

$$D = \frac{A \times C}{B}.$$

An average value of the values D from the three randomly obtained different regions was the mass fraction ratio of the element sulfur in the first positive electrode active material to the element sulfur in the second positive electrode active material in the positive electrode.

3. Test method of particle size of positive electrode active material

A cross section of the positive electrode removed from the battery was cut using ion polishing or FIB, and analyzed using a scanning electron microscope (SEM), with a magnification set to 3000-5000 times. According to the method described in "1. Test method of sulfur percentage in positive electrode active material", sulfurized polyacrylonitrile particles with high sulfur percentage and low sulfur percentage were determined, and corresponding particle sizes of the sulfurized polyacrylonitrile particles were measured and averaged. The particle size was an equivalent circular diameter.

4. Method for determining whether first active material and second active material form agglomerate

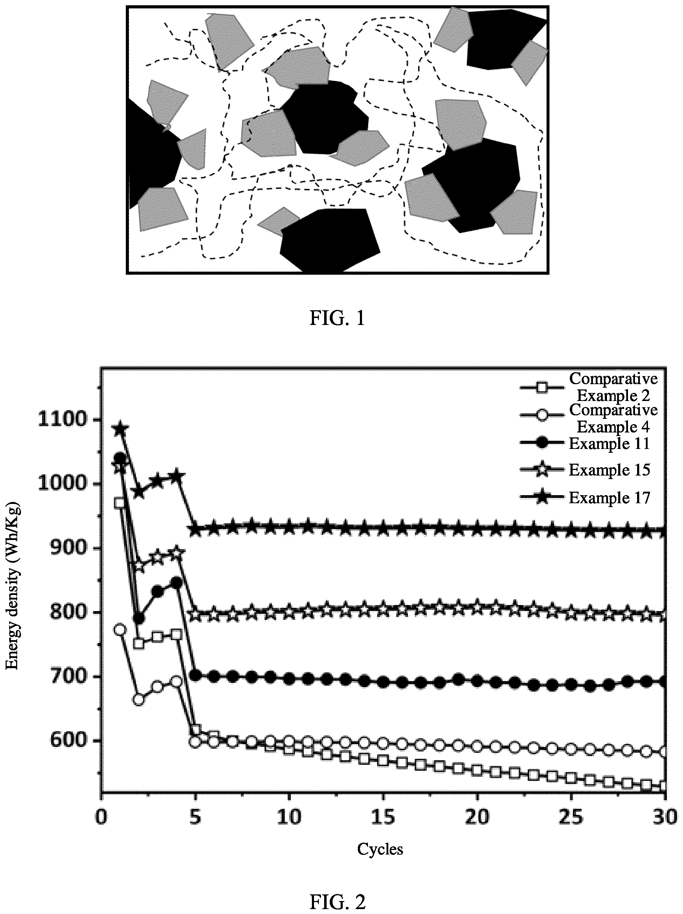

A cross section of the positive electrode after cycling was cut using CP or FIB, and analyzed using a scanning electron microscope (SEM), with a magnification set to 5000-8000 times. According to the method described in "1. Test method of sulfur percentage in positive electrode active material", positions of sulfurized polyacrylonitrile particles with high sulfur percentage and low sulfur percentage were determined. As shown in FIG. 1, the black particles represented the sulfurized polyacrylonitrile particles with high sulfur percentage, the gray particles represented the sulfurized polyacrylonitrile particles with low sulfur percentage, and the dashed-line parts represented the binder, the conductive agent, and the like. When the particles in the image satisfied the following two conditions, it was considered that the first active material and the second active material formed an agglomerate:

(1) the surface of the sulfurized polyacrylonitrile particles with high sulfur percentage was surrounded by at least two sulfurized polyacrylonitrile particles with low sulfur percentage; and
(2) there were at least three sulfurized polyacrylonitrile particles satisfying condition (1) in the image.

5. Test method of energy density and energy density retention rate of lithium-sulfur battery

The button cell was tested using a LAND test system. The battery was discharged at 0.05C in the first cycle, charged and discharged at 0.1C in the second to fourth cycles (that was, activated at a low rate), and then charged and discharged at 0.4C in the 5th to 30th cycles. An energy density of the battery was measured after each cycle, and a curve of the energy density as a function of the number of cycles was plotted. A mass of the positive electrode was a sum of masses of the first positive electrode active material, the second positive electrode active material, the binder, and the conductive agent.

A ratio of the energy density after the 30th cycle to the energy density after the 5th cycle was recorded as an energy density retention rate.

**III. Test results**

Table 1 shows influences of the positive electrode and electrolyte in the examples and comparative examples of this application on the energy density and energy density retention rate of the lithium-sulfur battery.

As shown in Comparative Examples 1 to 3, when the sulfurized polyacrylonitrile with high sulfur percentage ($\geq$ 45wt%) is used as the only positive electrode active material, the lithium-sulfur battery has low energy density and energy density retention rate, which cannot meet the use requirements. As shown in Comparative Example 4, when the sulfurized polyacrylonitrile with low sulfur percentage ($\leq$ 40wt%) is used as the only positive electrode active material, the lithium-sulfur battery has a high energy density retention rate, but its absolute value of energy density is low, which cannot meet the use requirements. Two kinds of sulfurized polyacrylonitrile with different sulfur percentages are used as the positive electrode active material in Comparative Example 5, but these two kinds of sulfurized polyacrylonitrile have low sulfur percentages. Although this can increase the energy density retention rate of the lithium-sulfur battery, the lithium-sulfur battery has an excessively low absolute value of energy density, which cannot meet the use requirements.

As shown in Examples 1 to 21, when the positive electrode active material includes both the sulfurized polyacrylonitrile with high sulfur percentage (45wt%-60wt%) and the sulfurized polyacrylonitrile with low sulfur percentage (30wt%-40wt%), the lithium-sulfur battery has both high absolute value of energy density and high energy density retention rate.

As shown in Examples 1 to 5, when the ratio of the sulfur percentage in the first active material to the sulfur percentage in the second active material falls within the range of 1.1 to 1.5, both the energy density and energy density retention rate of the lithium-sulfur battery can be increased.

As shown in Examples 4 and 6 to 9, when the ratio of the mass of the element sulfur in the first active material to the mass of the element sulfur in the second active material falls within the range of 1 to 3, the positive electrode has higher energy density retention rate (greater than 97%) while maintaining a high energy density (the energy density in the 5th cycle is greater than 665 Wh/Kg and the energy density in the 30th cycle is greater than 650 Wh/Kg).

As shown in Examples 7 and 10 to 13, when the particle size of the first active material is 2 $\mu$m to 5 $\mu$m and the particle size of the second active material is 0.5 $\mu$m to 3 $\mu$m, the positive electrode has high energy density and energy density retention rate. The ratio of the particle size of the first active material to the particle size of the second active material falling within the range of 2.5 to 5 helps to further increase the energy density and energy density retention rate of the lithium-sulfur battery.

As shown in Examples 11 and 14, when the first active material and the second active material form an agglomerate such that the second active material surrounds the surface of the first active material, the energy density and energy density retention rate of the lithium-sulfur battery can be further increased.

As shown in Examples 14 to 16, when the compacted density of the positive electrode falls within the range of 1.2 g/cm$^3$ to 1.5 g/cm$^3$, the positive electrode has higher energy density and energy density retention rate.

As shown in Examples 15 and 17 to 21, on the basis of using both the sulfurized polyacrylonitrile with high sulfur percentage (45wt%-60wt%) and the sulfurized polyacrylonitrile with low sulfur percentage (30wt%-40wt%) as the positive electrode active material, using the electrolyte including 2wt% to 4wt% phosphoric ester additive in combination can further significantly increase the energy density of the lithium-sulfur battery while maintaining a high energy density retention rate.

In addition, FIG. 2 shows curves of the energy densities of the lithium-sulfur batteries in Comparative Example 2, Comparative Example 4, Example 11, Example 15, and Example 17 of this application as a function of the number of cycles. The results show that when the positive electrode active material includes both the sulfurized polyacrylonitrile with high sulfur percentage (45wt%-60wt%) and the sulfurized polyacrylonitrile with low sulfur percentage (30wt%-40wt%), the energy density of the lithium-sulfur battery is significantly increased. When the first active material and the second active material form an agglomerate such that the second active material surrounds the surface of the first active material, the energy density of the lithium-sulfur battery can be further increased. Using the electrolyte including the phosphoric ester additive in combination helps to further increase the energy density of the lithium-sulfur battery.

**Table 1**

| | Positive electrode | | | | | | | | | Electrolyte | | Energy density in the 5th cycle (Wh/Kg) | Energy density in the 30th cycle (Wh/Kg) | Energy density retention rate |
|---|---|---|---|---|---|---|---|---|---|---|---|---|---|---|
| | Sulfur percentage in first positive electrode active material (wt%) | Sulfur percentage in second positive electrode active material (wt%) | Sulfur percentage ratio of first positive electrode active material to second positive electrode active material | Mass ratio of element sulfur in first positive electrode active material and second positive electrode active material | Particle size of first positive electrode active material (μm) | Particle size of second positive electrode active material (μm) | Particle size ratio of first positive electrode active material to second positive electrode active material | Whether first active material and second active material form agglomerate | Compacted density (g/cm³) | Phosphoric ester additive | Percentage (wt%) | | | |
| Comparative Example 1 | 45 | - | - | - | 5 | - | - | No | 1.15 | - | - | 618.49 | 573.65 | 92.75% |
| Comparative Example 2 | 52 | - | - | - | 5 | - | - | No | 1.16 | - | - | 616.98 | 529.45 | 85.81% |
| Comparative Example 3 | 59 | - | - | - | 5 | - | - | No | 1.16 | - | - | 580.12 | 465.20 | 80.19% |
| Comparative Example 4 | - | 39 | - | - | - | 3 | - | No | 1.14 | - | - | 598.55 | 582.80 | 97.37% |
| Comparative Example 5 | 40 | 25 | 1.6 | 1 | 5 | 3 | 1.67 | No | 0.89 | - | - | 503.61 | 493.64 | 98.02% |
| Example 1 | 45 | 39 | 1.15 | 1 | 5 | 3 | 1.67 | No | 0.98 | - | - | 640.17 | 624.36 | 97.53% |
| Example 2 | 45 | 39 | 1.15 | 1 | 5 | 3 | 1.67 | No | 1.15 | - | - | 642.30 | 629.20 | 97.96% |
| Example 3 | 52 | 35 | 1.49 | 1 | 5 | 3 | 1.67 | No | 1.15 | - | - | 653.71 | 638.54 | 97.68% |
| Example 4 | 52 | 39 | 1.33 | 1 | 5 | 3 | 1.67 | No | 1.15 | - | - | 666.97 | 650.96 | 97.60% |
| Example 5 | 59 | 30 | 1.96 | 1.8 | 5 | 3 | 1.67 | No | 1.13 | - | - | 636.09 | 609.44 | 95.81% |
| Example 6 | 52 | 39 | 1.33 | 4 | 5 | 3 | 1.67 | No | 1.16 | - | - | 668.38 | 641.51 | 95.98% |
| Example 7 | 52 | 39 | 1.33 | 2.67 | 5 | 3 | 1.67 | No | 1.16 | - | - | 692.09 | 677.49 | 97.89% |
| Example 8 | 52 | 39 | 1.33 | 1.33 | 5 | 3 | 1.67 | No | 1.16 | - | - | 672.41 | 655.67 | 97.51% |
| Example 9 | 52 | 39 | 1.33 | 0.67 | 5 | 3 | 1.67 | No | 1.14 | - | - | 652.80 | 638.96 | 97.88% |
| Example 10 | 52 | 39 | 1.33 | 2.67 | 2 | 1 | 2 | No | 1.15 | - | - | 708.30 | 685.85 | 96.83% |
| Example 11 | 52 | 39 | 1.33 | 2.67 | 5 | 1.8 | 2.78 | No | 1.16 | - | - | 702.35 | 692.45 | 98.59% |
| Example 12 | 52 | 39 | 1.33 | 2.67 | 5 | 1 | 5 | No | 1.16 | - | - | 703.19 | 690.25 | 98.16% |
| Example 13 | 52 | 39 | 1.33 | 2.67 | 5 | 0.5 | 10 | No | 1.16 | - | - | 704.75 | 688.05 | 97.63% |
| Example 14 | 52 | 39 | 1.33 | 2.67 | 5 | 1.8 | 2.78 | Yes | 1.16 | - | - | 797.50 | 789.45 | 98.99% |

| | Positive electrode | | | | | | | | | Electrolyte | | | | |
|---|---|---|---|---|---|---|---|---|---|---|---|---|---|---|
| | Sulfur percentage in first positive electrode active material (wt%) | Sulfur percentage in second positive electrode active material (wt%) | Sulfur percentage ratio of first positive electrode active material to second positive electrode active material | Mass ratio of element sulfur in first positive electrode active material and second positive electrode active material | Particle size of first positive electrode active material (μm) | Particle size of second positive electrode active material (μm) | Particle size ratio of first positive electrode active material to second positive electrode active material | Whether first active material and second active material form agglomerate | Compacted density (g/cm³) | Phosphoric ester additive | Percentage (wt%) | Energy density in the 5th cycle (Wh/Kg) | Energy density in the 30th cycle (Wh/Kg) | Energy density retention rate |
| Example 15 | 52 | 39 | 1.33 | 2.67 | 5 | 1.8 | 2.78 | Yes | 1.38 | - | - | 797.42 | 796.41 | 99.87% |
| Example 16 | 52 | 39 | 1.33 | 2.67 | 5 | 1.8 | 2.78 | Yes | 1.52 | - | - | 789.60 | 773.89 | 98.01% |
| Example 17 | 52 | 39 | 1.33 | 2.67 | 5 | 1.8 | 2.78 | Yes | 1.38 | Tris(trimethylsilyl) phosphite | 2 | 929.70 | 927.32 | 99.74% |
| Example 18 | 52 | 39 | 1.33 | 2.67 | 5 | 1.8 | 2.78 | Yes | 1.38 | Tris(trimethylsilyl) phosphite | 4 | 930.40 | 919.51 | 98.83% |
| Example 19 | 52 | 39 | 1.33 | 2.67 | 5 | 1.8 | 2.78 | Yes | 1.38 | Tris(trimethylsilyl) phosphite | 6 | 753.29 | 715.70 | 95.01% |
| Example 20 | 52 | 39 | 1.33 | 2.67 | 5 | 1.8 | 2.78 | Yes | 1.38 | Diethyl phenylphosphite | 3 | 919.24 | 907.47 | 98.72% |
| Example 21 | 52 | 39 | 1.33 | 2.67 | 5 | 1.8 | 2.78 | Yes | 1.38 | Trimethyl phosphite | 1.5 | 818.08 | 801.15 | 97.93% |

References to "an embodiment", "some embodiments", "one embodiment", "another example", "an example", "a specific example", or "some examples" in this specification mean the inclusion of specific features, structures, materials, or characteristics described in the embodiment or example in at least one embodiment or example of this application. Therefore, descriptions in various places throughout this specification, such as "in some embodiments", "in an embodiment", "in one embodiment", "in another example", "in one example", "in a specific example", or "an example", do not necessarily refer to the same embodiment or example of this application. In addition, specific features, structures, materials, or characteristics herein may be combined in any suitable manner in one or more embodiments or examples.

Although illustrative embodiments have been demonstrated and described, persons skilled in the art should understand that the foregoing embodiments should not be construed as any limitation on this application, and that some embodiments may be changed, replaced, and modified without departing from the spirit, principle, and scope of this application

**Claims**

1. A positive electrode, comprising a first positive electrode active material and a second positive electrode active material, wherein the first positive electrode active material is sulfurized polyacrylonitrile with a sulfur percentage of 45wt% to 60wt%, and the second positive electrode active material is sulfurized polyacrylonitrile with a sulfur percentage of 30wt% to 40wt%.

2. The positive electrode according to claim 1, wherein a ratio of the sulfur percentage in the first active material to the sulfur percentage in the second active material is 1.1 to 1.5.

3. The positive electrode according to claim 1, wherein based on a weight of the positive electrode, a ratio of a mass of element sulfur in the first active material to a mass of element sulfur in the second active material is 1 to 3.

4. The positive electrode according to claim 1, wherein a particle size of the first active material is 2 μm to 5 μm, and a particle size of the second active material is 0.5 μm to 3 μm.

5. The positive electrode according to claim 4, wherein a ratio of the particle size of the first active material to the particle size of the second active material is 2.5 to 5.

6. The positive electrode according to claim 1, wherein the first active material and the second active material form an agglomerate, and according to an elemental analysis test method, the second active material surrounds surface of the first active material.

7. The positive electrode according to claim 1, wherein a compacted density of the positive electrode is 1.2 g/cm$^3$ to 1.5 g/cm$^3$.

8. An electrochemical apparatus, comprising a negative electrode, an electrolyte, and the positive electrode according to any one of claims 1 to 7.

9. The electrochemical apparatus according to claim 8, wherein the electrolyte comprises a phosphoric ester additive, and based on a weight of the electrolyte, a percentage of the phosphoric ester additive is 2% to 4%.

10. The electrochemical apparatus according to claim 9, wherein the phosphoric ester additive comprises at least one of trimethyl phosphate, triethyl phosphate, tributyl phosphate, triphenyl phosphate, trimethyl phosphite, triethyl phosphite, diethyl phenylphosphite, or tris(trimethylsilyl) phosphite.

11. The electrochemical apparatus according to claim 8, wherein the negative electrode comprises at least one of lithium metal, lithium-copper composite strip, lithium alloy, lithiated graphite material, or lithiated silicon material.

12. An electronic apparatus, comprising the electrochemical apparatus according to any one of claims 8 to 11.

FIG. 1

FIG. 2

## INTERNATIONAL SEARCH REPORT

| International application No. |
| --- |
| **PCT/CN2021/126238** |

| A. | CLASSIFICATION OF SUBJECT MATTER |
| --- | --- |

H01M 4/36(2006.01)i; H01M 4/583(2010.01)i

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXTC; ENTXT; DWPI; CNKI: 硫化聚丙烯腈, 正极, 阴极, 硫, 第一, 第二, sulf+ polyacrylonitrile, positive, cathode, sulfide, first, second

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 110148739 A (CENTRAL SOUTH UNIVERSITY) 20 August 2019 (2019-08-20) entire document | 1-12 |
| A | CN 103502283 A (ROBERT BOSCH GMBH) 08 January 2014 (2014-01-08) entire document | 1-12 |
| A | EP 3826095 A1 (UNIVERSITÄT STUTTGART) 26 May 2021 (2021-05-26) entire document | 1-12 |
| A | WO 2011129103 A1 (TOYOTA JIDOSHOKKI KK et al.) 20 October 2011 (2011-10-20) entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 July 2022** | **19 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/126238**

| Patent document cited in search report | | | Publication date (day/month/year) | Patent family member(s) | | | Publication date (day/month/year) |
|---|---|---|---|---|---|---|---|
| CN | 110148739 | A | 20 August 2019 | CN | 110148739 | B | 25 June 2021 |
| CN | 103502283 | A | 08 January 2014 | US | 2014154589 | A1 | 05 June 2014 |
| | | | | EP | 2705060 | A1 | 12 March 2014 |
| | | | | JP | 2014522547 | A | 04 September 2014 |
| | | | | DE | 102011075051 | A1 | 08 November 2012 |
| | | | | WO | 2012150060 | A1 | 08 November 2012 |
| | | | | KR | 20140023961 | A | 27 February 2014 |
| EP | 3826095 | A1 | 26 May 2021 | None | | | |
| WO | 2011129103 | A1 | 20 October 2011 | US | 2013029222 | A1 | 31 January 2013 |
| | | | | DE | 112011101347 | T5 | 24 January 2013 |
| | | | | JP | WO2011129103 | A1 | 11 July 2013 |

Form PCT/ISA/210 (patent family annex) (January 2015)